(19) Europäisches Patentamt
European Patent Office
Office européen des brevets

(11) EP 3 552 734 A1

(12) EUROPEAN PATENT APPLICATION
published in accordance with Art. 153(4) EPC

(43) Date of publication:
16.10.2019 Bulletin 2019/42

(51) Int Cl.:
B22F 1/00 (2006.01)

(21) Application number: 17879612.4

(22) Date of filing: 06.12.2017

(86) International application number:
PCT/JP2017/043781

(87) International publication number:
WO 2018/105642 (14.06.2018 Gazette 2018/24)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(30) Priority: 08.12.2016 JP 2016238735

(71) Applicant: DOWA Electronics Materials Co., Ltd.
Tokyo 101-0021 (JP)

(72) Inventors:
• SAITO Hirotoshi
Tokyo 101-0021 (JP)
• SATO Kimitaka
Tokyo 101-0021 (JP)
• KODAMA Daisuke
Tokyo 101-0021 (JP)

(74) Representative: Klang, Alexander H.
Wagner & Geyer Partnerschaft mbB
Patent- und Rechtsanwälte
Gewürzmühlstrasse 5
80538 München (DE)

(54) SILVER NANOWIRE, PRODUCTION METHOD THEREFOR, AND SILVER NANOWIRE INK

(57) To provide silver nanowires that are capable of significantly improving the conductivity and the visibility characteristics (e.g., the translucency and the haze characteristics) of a transparent conductor. Silver nanowires having attached to a surface thereof an organic protective agent, having an average diameter of 50 nm or less and an average length of 10 $\mu$m or more, and having an amount of the organic protective agent attached of from 1.5 to 8.0% by mass based on the total amount of the organic protective agent and silver. The silver nanowires can be produced by a method including: circulating silver nanowires having attached thereto the organic protective agent, in a circulation flow channel having in a middle thereof a crossflow filter, along with a liquid medium; and performing crossflow filtration with the filter while replenishing the liquid medium to the circulation flow channel continuously or intermittently, so as to wash off and remove a part of the organic protective agent on the surface of the silver nanowires to control an amount of the organic protective agent attached.

[Fig.1]

## Description

Technical Field

The present invention relates to silver nanowires that are useful as a material for forming a transparent conductor, and the like, and particularly have a high effect of decreasing contact resistance among the wires in the case where a transparent conductor is formed. The invention also relates to a method for producing the silver nanowires, and an ink using the silver nanowires.

Background Art

In the description herein, fine metal wires having a thickness of approximately 200 nm or less are referred to as "nanowires". Among them, silver nanowires are expected as a conductive material for imparting conductivity to a transparent substrate. By coating a liquid containing silver nanowires (i.e., a silver nanowire ink) on a transparent substrate, such as glass, PET (polyethylene terephthalate), and PC (polycarbonate), followed by removing the liquid component, the silver nanowires are in contact with each other on the substrate to form a conductive network, thereby achieving a transparent conductor.

Examples of the known production method of silver nanowires include a method of dissolving a silver compound in an alcohol solvent, and depositing metallic silver having a linear shape by utilizing the reduction power of the alcohol as the solvent, in the presence of a halogen compound and an organic protective agent. This synthesis method is referred to as an "alcohol solvent reduction method" in the description herein. According to the alcohol solvent reduction method, silver nanowires covered with the organic protective agent used in the synthesis are obtained. PVP (polyvinylpyrrolidone) has been well known as an organic protective agent that is useful for synthesizing silver nanowires with good yield by the alcohol solvent reduction method.

A technique is recently developed that synthesizes further thin and long silver nanowires by using an organic protective agent replacing PVP. For example, PTLs 1 and 2 describe a technique that synthesizes thin and long silver nanowires by using a copolymer having a polymerization composition with vinylpyrrolidone and a diallyldimethylammonium salt monomer as an organic protective agent. In particular, extremely thin silver nanowires having an average diameter of less than 30 nm can be synthesized according to the synthesis condition employed in Example 3 and the like of PTL 2. Thin and long silver nanowires are considerably advantageous for enhancing simultaneously both the conductivity and the visibility (i.e., the translucency and the haze characteristics) of a transparent conductor.

Crossflow filtration has also been known as a method of "purification" for controlling the length distribution of silver nanowires (PTL 2). Crossflow filtration is useful as a method of "concentrating" for increasing the silver nanowire concentration present in a silver nanowire dispersion liquid within a relatively short period of time (PTLs 2 and 3).

Citation List

Patent Literatures

PTL 1: JP-A-2015-180772
PTL 2: JP-A-2016-55283
PTL 3: JP-A-2015-206081

Summary of Invention

Technical Problem

For improving both the conductivity and the visibility characteristics (such as the translucency and the haze characteristics) simultaneously, the application of silver nanowires that are thin and long as much as possible is advantageous, as described above. The use of long wires increases the chance of contact of the wires and forms a conductive network with a smaller number of the contact points, and thereby the total length of the wires that is necessary for providing conductivity can be decreased. Consequently, the amount of silver nanowires used per unit area of the transparent conductor can be decreased. According to the decrease, the translucency is enhanced, and the diffuse reflection by the wires is decreased. As a result, the visibility characteristics of the transparent conductor are enhanced. The use of thin wires further enhances the visibility characteristics.

It is considered that the conductivity of the conductive network can be enhanced by decreasing the electric resistance at the intersection of the silver nanowires (which may be hereinafter referred to as an "intersection resistance"), and thereby further improvements of the conductivity and the visibility characteristics are expected. The factor increasing the intersection resistance may include the presence of an organic protective agent adsorbed on the surface of the silver nanowires. The organic protective agent is generally constituted by a polymer, and the polymer present on the surfaces of the wires becomes the factor inhibiting the conductivity at the intersection point by inhibiting metallic silver from being in direct contact with each other, and decreasing the microscopic contact area and contact pressure. The organic protective agent, however, has an important function imparting dispersibility in a liquid to the silver nanowires. Therefore, it is impossible to remove the organic protective agent completely from the surface of the silver nanowires. Furthermore, it is considered that the polymer of the organic protective agent is adsorbed at multiple points on the surface of metallic silver, and it has been considerably difficult to control the amount of the organic protective agent attached to the surface of the silver nanowires by detaching a part thereof.

An object of the invention is to provide silver nanowires that are capable of significantly improving the conductivity and the visibility characteristics (e.g., the translucency and the haze characteristics) of a transparent conductor, by controlling the amount of the organic protective agent attached to the surface of the silver nanowires within a range capable of retaining the dispersibility in a liquid.

Solution to Problem

As a result of the studies by the inventors, it has been found that a part of the organic protective agent attached to the surface of the silver nanowires can be washed off to control the amount thereof attached thereto, by flowing and circulating the wires on the flow of the liquid medium in crossflow filtration while renewing the liquid medium with a fresh one. Furthermore, it has also been found that the rate of washing off the organic protective agent from the surface of the wires (which may be hereinafter referred to as a "desorption rate") during the flowing and circulating can be relieved to facilitate the control of the amount of the organic protective agent attached thereto to the desired amount, by performing a pretreatment of dispersing the silver nanowires to be subjected to the flowing and circulating into a liquid medium containing a polymer having a property capable of being adsorbed on the surface of metallic silver (such as PVP and the organic protective agent that is actually attached to the silver nanowires) dissolved therein in advance. Moreover, the addition of the polymer having a property capable of being adsorbed thereon to the liquid medium circulated during the crossflow filtration performed is also effective for relieving the desorption rate. The invention has been completed based on the aforementioned knowledge.

For achieving the object, the invention provides silver nanowires having attached to a surface thereof an organic protective agent, having an average diameter of 50 nm or less and an average length of 10 $\mu$m or more, and having an amount of the organic protective agent attached of from 1.5 to 8.0% by mass based on the total amount of the organic protective agent and silver. The organic protective agent applied may be a polymer having a weight average molecular weight, for example, of from 30,000 to 3,000,000.

The invention also provides a silver nanowire ink containing the silver nanowires in a liquid medium in an amount of from 0.02 to 5.0% by mass in terms of metallic silver concentration. The silver nanowire ink is a coating liquid (including one in the form of paste) containing silver nanowires, that is coated for forming a conductive coated film on a substrate.

As a method for producing the silver nanowires having an amount of the organic protective agent attached of from 1.5 to 8.0% by mass based on the total amount of the organic protective agent and silver, a method for producing silver nanowires is provided that includes: circulating silver nanowires having attached thereto the organic protective agent, in a circulation flow channel having in a middle thereof a crossflow filter, along with a liquid medium; and performing crossflow filtration with the filter while replenishing the liquid medium to the circulation flow channel continuously or intermittently, so as to wash off and remove a part of the organic protective agent on the surface of the silver nanowires to control an amount of the organic protective agent attached (crossflow circulation washing step).

The silver nanowires subjected to the crossflow circulation washing step are preferably subjected to a pretreatment of dispersing the silver nanowires in a water solvent having dissolved therein one or more kinds of a polymer selected from PVP (polyvinylpyrrolidone) and a copolymer of vinylpyrrolidone and another monomer.

A water solvent may be used as the liquid medium circulated. The water solvent means pure water or water having dissolved therein a water-soluble substance. For example, a water solvent having dissolved therein one or more kinds of a polymer selected from PVP (polyvinylpyrrolidone) and a copolymer of vinylpyrrolidone and another monomer may be used. The concentration of the polymer in the liquid medium may be from 10 to 5,000 ppm (i.e., from 0.001 to 0.500% by mass).

Specifically, the following inventions are described herein.

[1] Silver nanowires having attached to a surface thereof an organic protective agent, having an average diameter of 50 nm or less and an average length of 10 $\mu$m or more, and having an amount of the organic protective agent attached of from 1.5 to 8.0% by mass based on the total amount of the organic protective agent and silver.

[2] The silver nanowires according to the item [1], wherein the organic protective agent is a polymer having a vinylpyrrolidone structural unit.

[3] The silver nanowires according to the item [1] or [2], wherein the organic protective agent is a polymer having a weight average molecular weight of from 30,000 to 3,000,000.

[4] A silver nanowire ink containing a liquid medium and therein the silver nanowires according to any one of the items [1] to [3] in an amount of from 0.02 to 5.0% by mass in terms of metallic silver concentration.

[5] A method for producing silver nanowires having an amount of an organic protective agent attached of from 1.5 to 8.0% by mass based on the total amount of the organic protective agent and silver, the method including: circulating silver nanowires having attached thereto the organic protective agent, in a circulation flow channel having in a middle thereof a crossflow filter, along with a liquid medium; and performing crossflow filtration with the filter while replenishing the liquid medium to the circulation flow channel continuously or intermittently, so as to wash off and remove a part of the organic protective agent on the surface of the silver nanowires to control an amount of the organic protective agent attached (crossflow circulation washing step).

[6] The method for producing silver nanowires according to the item [5], wherein the silver nanowires subjected to the crossflow circulation washing step have an average diameter of 50 nm or less.

[7] The method for producing silver nanowires according to the item [5] or [6], wherein the silver nanowires subjected to the crossflow circulation washing step are subjected to a pretreatment of dispersing the silver nanowires in a water solvent having dissolved therein one or more kinds of a polymer selected from PVP (polyvinylpyrrolidone) and a copolymer of vinylpyrrolidone and another monomer.

[8] The method for producing silver nanowires according to any one of the items [5] to [7], wherein the liquid medium circulated is a water solvent.

[9] The method for producing silver nanowires according to any one of the items [5] to [7], wherein the liquid medium circulated is a water solvent having dissolved therein one or more kinds of a polymer selected from PVP (polyvinylpyrrolidone) and a copolymer of vinylpyrrolidone and another monomer.

[10] The method for producing silver nanowires according to any one of the items [5] to [7], wherein the liquid medium circulated is a water solvent having dissolved therein one or more kinds of a polymer selected from PVP (polyvinylpyrrolidone) and a copolymer of vinylpyrrolidone and another monomer in a concentration of from 10 to 5,000 ppm.

In the description herein, the average diameter, the average length, and the average aspect ratio are in accordance with the following definitions.

Average Length

On a micrograph (such as an FE-SEM micrograph), the trace length from one end to the other end of one silver nanowire is designated as the length of the wire. The value obtained by averaging the lengths of the respective silver nanowires present on the micrograph is designated as the average length. For calculating the average length, the total number of the wires to be measured is 100 or more. A wire-like product having a length of less than 1.0 $\mu$m and a particulate product having a ratio of the length of the longest portion (which may be referred to as a "major diameter") and the length of the longest portion in the direction perpendicular to the major diameter (which may be referred to as a "minor diameter") (the ratio may be referred to as an "axial ratio") of less than 5.0 are excluded from the measurement.

Average Diameter

On a micrograph (such as an FE-SEM micrograph), the average width between the contours on both sides in the thickness direction of one silver nanowire is designated as the diameter of the wire. The value obtained by averaging the diameters of the respective silver nanowires present on the micrograph is designated as the average diameter. For calculating the average diameter, the total number of the wires to be measured is 100 or more. A wire-like product having a length of less than 1.0 $\mu$m and a particulate product having an axial ratio of less than 5.0 are excluded from the measurement.

Average Aspect Ratio

The average aspect ratio is calculated by substituting the average diameter and the average length for the following expression (1).

$$(average\ aspect\ ratio) = (average\ length\ (nm)) / (average$$

$$diameter\ (nm))\quad(1)$$

Advantageous Effects of Invention

The invention can provide silver nanowires having an amount of an organic protective agent present on the surface of the silver nanowires that is decreased to a prescribed range. The amount thereof attached can be prevented from being decreased excessively, and thereby the dispersibility thereof in a liquid can also be ensured. In a transparent conductor formed with an ink using the silver nanowires, the amount of the silver nanowires necessary for providing a certain conductivity can be decreased since the intersection resistance at the intersection of the wires is decreased. Accordingly, assuming transparent conductors having equivalent conductivity levels, the haze can be significantly decreased from the ordinary ones. The invention contributes to the production of a transparent conductor that simultaneously achieves the conductivity and the visibility characteristics to high levels.

Brief Description of Drawings

Fig. 1 is an illustration schematically showing an example of a tubular channel structure used for crossflow circulation washing.
Fig. 2 is an illustration schematically showing a concept of purification by crossflow filtration using a porous ceramic filter.
Fig. 3 is a TG-DTA curve of silver nanowires obtained in Example 1.
Fig. 4 is a graph showing a relationship between a sheet resistance and a haze of transparent conductors having various film thicknesses produced in Examples 1 and 3 to 6 and Comparative Example 1.
Fig. 5 is a structural formula of a vinylpyrrolidone structural unit.

Description of Embodiments

Dimension and Shape of Silver Nanowires

The silver nanowires preferably have a shape that is thin and long as much as possible from the standpoint of the formation of a transparent conductor excellent in conductivity and visibility characteristics. Specifically, the silver nanowires preferably have an average diameter of 50 nm or less and an average length of 10 $\mu$m or more. The average diameter is more preferably less than 40 nm, and further preferably less than 30 nm. An average aspect ratio, which is the ratio of the average length and the average diameter, is preferably 250 or more, and more preferably 300 or more.

Organic Protective Agent

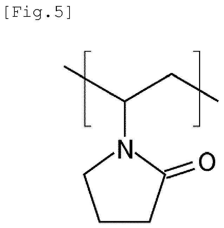

In the synthesis of silver nanowires by the alcohol solvent reduction method, reduction reaction is performed in the presence of an organic protective agent. The organic protective agent present in the solvent immediately covers the surface of silver deposited, and exhibits a function suppressing the deposited product of metallic silver from coarsely growing. The deposited shape in the form of nanowires can be obtained through the function. The organic protective agent attached to the surface of the silver nanowires thus synthesized has functions ensuring the dispersibility of the wires in a liquid and preventing oxidation of silver. A treatment of replacing the organic protective agent on the surface of the silver nanowires by an organic protective agent of another kind can be performed in principle. However, the replacing treatment is not generally performed industrially due to the complication of the process. Accordingly, the silver nanowires used for a silver nanowire ink generally have attached to the surface thereof the organic protective agent of the kind that is used in the synthesis thereof.
In the case where the silver nanowires having the organic protective agent used in the synthesis thereof attached thereto are applied to a silver nanowire ink, the organic protective agent that appropriately has both the property suitable for the synthesis and the dispersibility in a liquid is selected. The organic protective agent of this kind is preferably one having a vinylpyrrolidone structural unit (Fig. 5). While PVP (polyvinylpyrrolidone) has been well known, various copolymers of vinylpyrrolidone and another monomer are being developed in recent years. Examples thereof include a copolymer of vinylpyrrolidone and a cationic monomer, such as a copolymer of vinylpyrrolidone and a diallyldimethylammonium salt monomer, a copolymer of vinylpyrrolidone and an acrylic or methacrylic monomer, and a copolymer of vinylpyrrolidone and a maleimide monomer. The polymerization composition of the copolymer is preferably formed of from 0.1 to 10% by mass of the monomer other than vinylpyrrolidone and the balance of vinylpyrrolidone. The silver nanowires according to the invention have the polymer used in the synthesis thereof attached thereto as an organic protective agent, and in the case where a polymer is added to the liquid in the process of the "pretreatment" or the "crossflow circulation washing" described later, the polymer is also attached thereto and becomes a constitutional component of the organic protective agent. The polymer used in the "pretreatment" or the "crossflow circulation washing" is also preferably one having a vinylpyrrolidone structural unit as described later.

The organic protective agent attached to the surface of the silver nanowires becomes a factor inhibiting the conduction at the intersection points of the silver nanowires in the transparent conductor formed of the ink using the silver nanowires, as described above. According to the investigations by the inventors, in the case where the silver nanowires have an average diameter of 50 nm or less and an average length of 10 $\mu$m or more, the effect of enhancing the conduction between the wires is conspicuously exhibited in the transparent conductor formed of the ink using the silver nanowires, in such a manner that the amount of the organic protective agent attached is decreased to 8.0% by mass or less based on the total amount of the organic protective agent and silver. Accordingly, when the amount of the organic protective agent attached becomes 8.0% by mass or less, the amount of the wires necessary for providing a certain conductivity (sheet resistance) can be decreased by the effect of decreasing the intersection resistance of the silver nanowires. Consequently, assuming the same sheet resistance, the visibility characteristics (particularly the haze characteristics) of the transparent conductor are conspicuously improved. In the case where the amount of the organic protective agent attached becomes too small, on the other hand, the dispersibility in a liquid is lowered, thereby causing, for example, sedimentation and aggregation of the silver nanowires in the ink in the early stage. An ink retaining the dispersed state of silver nanowires for a longer period of time has a less time restriction in the process of coating a transparent coated film, which is advantageous for industrial production. As a result of the various investigations, by ensuring the amount of the organic protective agent attached of approximately 1.5% by mass, the silver nanowire ink provided retains the dispersed state of the silver nanowires for several hours, and thus is useful for industrial production. Therefore, herein, the amount of the organic protective agent attached is defined to a range of from 1.5% by mass or more and 8.0% by mass or less based on the total amount of the organic protective agent and silver. The amount thereof is preferably managed to a range of 3.0% by mass or more and 8.0% by mass or less, and in the case where particularly excellent dispersion stability is demanded, the amount thereof may be managed to a range of 5.0% by mass or more and 8.0% by mass or less. The amount of the organic protective agent attached can be controlled by the "crossflow circulation washing" described later. The amount of the organic protective agent attached can be measured by performing a TG-DTA measurement for a dried specimen of the silver nanowires obtained by drying and removing the liquid medium. Specifically, the silver nanowires are heated in the air from ordinary temperature to a temperature exceeding 600°C at a temperature increasing rate of 10°C/min, and the weight change of from 150°C to 600°C is designated as the amount of the organic protective agent attached to the silver nanowires. The components of the liquid medium remaining in the dried specimen of the silver nanowires (specifically water and an alcohol having from 1 to 4 carbon atoms) are evaporated and removed in the process of heating to 150°C at the temperature increasing rate, and the components of the organic protective agent are removed from the surface of the nanowires during heating from 150°C to 600°C.

The organic protective agent is preferably a polymer having a weight average molecular weight of from 30,000 to 3,000,000. When the weight average molecular weight of the organic protective agent is too small, particulate metallic silver tends to be formed in the alcohol solvent reduction method, which decreases the yield of the silver nanowires. When the weight average molecular weight is too large, on the other hand, the resulting silver nanowires tend to have an increased diameter, which makes difficult the synthesis of thin wires suitable for a transparent conductor. In the case where thin wires having an average diameter, for example, of 40 nm or less are to be stably provided, a polymer having a weight average molecular weight of 100,000 or less is advantageously applied. The weight average molecular weight can be obtained by GPC (gel permeation chromatography).

Production Method

The silver nanowires having the controlled amount of the organic protective agent attached thereto can be obtained, for example, by subjecting silver nanowires synthesized by the alcohol solvent reduction method in the presence of the organic protective agent to the crossflow circulation washing described later. The synthesis of the silver nanowires by the alcohol solvent reduction method can be performed by a known method (for example, the method described in PTL 1). The reaction liquid (slurry) after the synthesis is subjected to solid-liquid separation by such a method as decantation, and then sufficiently washed to provide silver nanowires to be subjected to the following process. Silver nanowires or a dispersion liquid thereof available as industrial products may be procured and used.

Pretreatment

Preceding the decrease of the amount of the organic protective agent attached in the crossflow circulation washing step described later, the silver nanowires are preferably subjected to a treatment of dispersing the silver nanowires in a polar solvent (such as a water solvent) having dissolved therein one or more kinds of a polymer selected from PVP (polyvinylpyrrolidone) and a copolymer of vinylpyrrolidone and another monomer. Specific examples of the copolymer of vinylpyrrolidone and another monomer include a copolymer of vinylpyrrolidone and a diallyldimethylammonium salt monomer, a copolymer of vinylpyrrolidone and an acrylic or methacrylic monomer, and a copolymer of vinylpyrrolidone and a maleimide monomer. These are polymers that can be used as the organic protective agent in the synthesis of the silver nanowires. A polymer of the same kind as the organic protective agent having been attached to the silver nanowires may also be used.

It has been found that the desorption of the organic protective agent is gradually performed in the crossflow circulation washing, by performing the dispersion treatment as the pretreatment. Specifically, the organic protective agent on the surface of the silver nanowires can be prevented from being washed and removed rapidly, so as to facilitate the control of the amount thereof attached. In the case where a water solvent is used as the liquid medium for the dispersion treatment, the amount of the polymer dissolved in the solvent may be from 0.01 to 2.0% by mass based on the total amount of water and the polymer. The pretreatment is not essential, but is effective in the case where the circulation is elaborately performed for providing wires having a large average length in the process of the crossflow circulation washing or in the case where the control of the amount of the organic protective agent attached is performed precisely.

Crossflow Circulation Washing

The silver nanowires having attached thereto the organic protective agent are circulated along with a flowing liquid medium in a circulation flow channel having a crossflow filter in the middle thereof. At this time, the crossflow filtration is performed with the filter while replenishing the liquid medium to the circulation flow channel continuously or intermittently. According to the procedure, the surface of the silver nanowires is washed with the liquid medium, and a part of the polymer of the organic protective agent adsorbed on the surface of metallic silver is detached. The amount of the organic protective agent attached to the surface of the silver nanowires can be controlled to a prescribed range based on the "relationship between the circulation time and the amount attached" having been comprehended in advance by a preliminary experiment or the like corresponding to the circulation condition. The "circulation" herein means repetition of the process, in which a material goes around and returns to the original position (for example, the tank as the starting point) without being discharged outside the system through the crossflow filter. Accordingly, the "circulation" referred in the description herein encompasses not only the case where the crossflow filtration is continuously performed with an equipment having a circulation flow channel constituted by a tubular channel, but also, for example, the case of performing a batch type process where the liquid after the crossflow filtration (containing the silver nanowires) is once recovered with a vessel separate from the start vessel, and then the recovered product is transported by a worker to return to the original start vessel and again subjected to the crossflow filtration after adding a fresh liquid medium thereto. In the batch type process, the tubular channel structure at least from the start vessel to the recovering vessel through the crossflow filter corresponds to the "circulation flow channel" referred in the description herein.

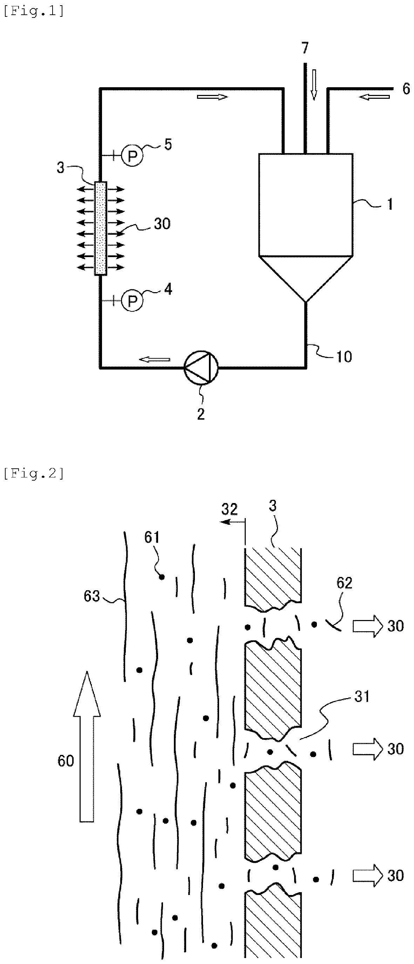

Fig. 1 schematically exemplifies an example of a tubular channel structure used for crossflow circulation washing. A circulation flow channel 10 is constituted by a tubular channel having a tank 1, a pump 2, and a crossflow filter 3 in the midstream thereof. A silver nanowire dispersion liquid 6 before subjecting to crossflow circulation washing is placed in the tank 1, and the amounts of the liquid medium and the silver nanowires in the tank are controlled to the appropriate amounts. Subsequently, the silver nanowires are flown in the circulation flow channel 10 along with the liquid medium with the power of the pump 2. The surface of the silver nanowires is washed with the liquid medium during flowing, and a part of the organic protective agent attached to the surface thereof is detached into the liquid. A porous ceramic tube may be used as the crossflow filter 3. Fig. 1 shows one tubular filter, and multiple tubular filters may be disposed in parallel. The particulate product and a part of the short nanowires are discharged as a filtrate 30 outside the channel through the tube wall of the filter 3 along with a part of the liquid medium. Simultaneously, a part of the organic protective agent detached into the liquid is also discharged outside the channel. A fresh liquid medium in an amount corresponding to the amount of the liquid discharged is replenished continuously or intermittently during the circulation. The liquid medium to be replenished is shown by numeral 7 in Fig. 1. The long silver nanowires (which can be recovered as an ink material) that are not discharged outside the channel through the crossflow filter 3 are gradually decreased in the amount of the organic protective agent attached thereto, in the process of circulating in the same flow channel multiple times.

Fig. 2 schematically shows the concept of purification by the crossflow filtration using a porous ceramic filter. In the figure, the interior of the tubular channel that is inside the inner wall of the porous ceramic filter 3 is shown by numeral 32. The direction of the flow in the interior 32 of the tubular channel is shown by the arrow with numeral 60. Not only particulate impurity 61 but also a part of relatively short nanowires 62 are discharged outside along with the liquid medium through pores 31 (which are actually continuous voids) of the porous ceramic filter. A part of the organic protective agent detached from the surface of the circulating silver nanowires is also discharged outside along with the liquid medium, and thus the circulating liquid is cleaned. The probability that wires 62 having a length that is significantly larger than the pore diameter are discharged outside through the pores 31 is extremely small. Consequently, the most of the long wires 62 proceed through the circulation flow channel on the flow inside the circulation tubular channel.

The procedure itself of the crossflow filtration using a porous ceramic tube is described in PTL 2 in detail, and the procedure may be utilized herein. However, the crossflow filtration described herein is novel in the point that the amount of the organic protective agent attached to the surface of the silver nanowires is controlled to a range of 1.5% by mass or more and 8.0% by mass or less, and more preferably to a range of 3.0% by mass or more and 8.0% by mass or less. The crossflow circulation washing can also be utilized as "crossflow purification" for controlling the length distribution of the silver nanowires. According to the investigations by the inventors, however, it has now been found that when the crossflow filtration is elaborately performed for sufficiently enhancing the proportion of the long wires, the amount of the organic protective agent attached often becomes excessively small, which is disadvantageous for the formation of an ink with good dispersibility. Accordingly, for controlling the amount of the organic protective agent attached thereto to the aforementioned prescribed range, it is necessary to avoid excessive circulation.

The avoidance of excessive circulation for ensuring the residual amount of the organic protective agent on the surface of the silver nanowires adversely influences the purification for increasing the proportion of the long wires. Consequently, it is not necessarily easy to achieve simultaneously both the "appropriate amount of the organic protective agent attached (washing)" and the "appropriate length distribution of the wires (purification)" in one process of crossflow filtration. One of the measures for making easy the achievement is the aforementioned pretreatment. By using the silver nanowires having been subjected to the pretreatment, the desorption rate of the organic protective agent during the circulation flowing is lowered, and even when the circulation is continued until the average length of the wires becomes sufficiently large, the organic protective agent can be prevented from being excessively detached.

As another one of the measures for making easy the achievement of the "appropriate amount of the organic protective agent attached (washing)" and the "appropriate length distribution of the wires (purification)", a method is described herein, in which one or more kinds of a polymer selected from PVP (polyvinylpyrrolidone) and a copolymer of vinylpyrrolidone and another monomer is dissolved in the liquid medium to be circulated in the crossflow circulation washing. Examples of the liquid medium used in the crossflow circulation washing include water, methanol, ethanol, 1-propanol, 2-propanol, 1-butanol, and mixed solvents thereof, and the use of a water solvent is industrially appropriate. Examples of the copolymer of vinylpyrrolidone and another monomer include a copolymer of vinylpyrrolidone and a diallyldimethylammonium salt monomer, a copolymer of vinylpyrrolidone and an acrylic or methacrylic monomer, and a copolymer of vinylpyrrolidone and a maleimide monomer, as similar to the pretreatment. These are polymers that can be used as the organic protective agent in the synthesis of the silver nanowires. A polymer of the same kind as the organic protective agent having been attached to the silver nanowires may also be used.

It suffices that the polymer is dissolved in the initial liquid medium and the liquid medium to be replenished. In the case where a water solvent is used as the liquid medium, the concentration of the polymer dissolved therein may be, for example, from 10 to 5,000 ppm (from 0.001 to 0.500% by mass) based on the total amount of water and the polymer. The function moderating the desorption of the organic protective agent during the circulation flowing can also be obtained by this method, as similar to the case using the silver nanowires having been subjected to the pretreatment. As similar to the pretreatment, this method is not essential, but is effective in the case where the circulation is elaborately performed for providing wires having a large average length or in the case where the control of the amount of the organic protective agent attached is performed precisely. It is more effective to use both the pretreatment and this method of adding the polymer to the circulation liquid.

The organic protective agent attached to the surface of the silver nanowires is detached to some extent in the production process that has been ordinarily practiced. For example, in the case of performing a process of washing or purification by a "dispersion and aggregation method", in which a poor solvent, such as acetone, is added to a silver nanowire dispersion liquid to perform aggregation and sedimentation of the wires, and then the wires are redispersed with a polar solvent, such as water, the amount of the organic protective agent on the surface of the silver nanowires is decreased as compared to before the treatment. In this case, however, with the decrease of the amount of the organic protective agent attached, the aggregation and sedimentation is difficult to occur even by adding a poor solvent, such as acetone. Accordingly, it is difficult to decrease the amount of the organic protective agent on the surface of the silver nanowires to 8.0% by mass or less by the dispersion and aggregation method. Furthermore, the organic protective agent on the surface of the silver nanowires is detached by centrifugal separation. However, even when the centrifugal separation is performed until the amount of the organic protective agent attached thereto to 8.0% by mass or less, the silver nanowires may receive damages, such as folding, collapse, and severe aggregation of the wires, and it is generally difficult to recover the sound long wires.

On the other hand, the crossflow circulation washing described herein can efficiently control the prescribed amount of the organic protective agent attached. One of the advantages of the use of the crossflow filtration is that the organic protective agent detached from the surface of the silver nanowires is discharged outside the channel through the wall surface of the filter during the circulation, but a fresh liquid medium of the same kind containing no organic protective agent can be replenished thereto. Accordingly, the concentration of the organic protective agent detached from the surface of the silver nanowires in the circulating liquid medium is not continuously increased. Therefore, the phenomenon that the organic protective agent once detached from the surface of the wires is again attached to the surface of the wires is difficult to occur, and thus the amount of the organic protective agent attached can be efficiently controlled to the target value.

The circulation condition may vary depending on the scale of the equipment and the filtration characteristics of the porous filter, and for example, the initial concentration of the silver nanowires in the circulation flow channel may be controlled to a range of from 0.005 to 3.0% by mass based on the initial total amount of the liquid medium and the silver nanowires. Assuming that the average flow rate of the liquid introduced to the tubular filter is represented by Qo (L/min), and the average flow rate of the liquid discharged outside through the tubular filter (i.e., the filtrate) is represented by $Q_1$ (L/min), the ratio $Q_1/Q_0$ is preferably controlled to a range of from 0.00001 to 0.1. The average flow rate herein is a value obtained by dividing the total flow amount by the filtration time. The difference between $Q_0$ and $Q_1$ corresponds to the average flow amount of the liquid proceeding to the tubular channel on the downstream side of the filter. The flow speed inside the tubular crossflow filter may be set, for example, to a range of from 0.1 to 100 m/s (i.e., from 100 mm/s to 100,000 m/s), and is preferably set to a range of from 0.1 to 10 m/s (i.e., from 100 mm/s to 10,000 mm/s), at the inlet end of the tubular filter. In the case where the liquid is treated by dividing into the multiple tubular filter disposed in parallel, assuming that the average flow rate of the total amount of the liquid introduced to the bundle of the tubular filter disposed in parallel is represented by Qo (L/min), and the average flow rate of the total amount of the liquid discharged outside from the bundle of the tubular filter (i.e., the filtrate) is represented by $Q_1$ (L/min), the ratio $Q_1/Q_0$ is preferably controlled to the aforementioned range, and the flow speed is preferably controlled to the aforementioned range at the inlet ends of the respective tubular filters. The total amount of the liquid medium replenished during the circulation may be set, for example, to from 0.5 to 20 times, and more preferably from 1 to 10 times, the initial total mass of the liquid medium and the silver nanowires. The circulation time (which is the total time of the crossflow filtration performed in the case where the batch type process is performed) may be set, for example, to a range of from 1 to 500 hours. The silver nanowires tend to be aggregated when the liquid temperature during the circulation is excessively increased, and therefore the liquid temperature is preferably controlled to prevent from being increased excessively. As a method therefor, it is effective to suppress the temperature increase of the circulating liquid by using a jacketed tank as the tank (numeral 1 in Fig. 1) and flowing cooling water in the jacket. The liquid temperature during the circulation is preferably in a range of from 5 to 40°C. The liquid medium to be replenished during the circulation is preferably controlled to a temperature of from 5 to 20°C in advance.

Concentrating and Ink Formation

The silver nanowires having the amount of the organic protective agent attached thereto that has been decreased to the prescribed range by the crossflow circulation washing are subjected depending on necessity to a treatment for increasing the concentration of the wire in the liquid (concentrating), and then dispersed in a liquid medium having a prescribed composition to form a silver nanowire ink (coating liquid) for forming a conductive coated film on a surface of a substrate. The concentrating operation may be performed efficiently, for example, by "crossflow concentrating" utilizing the equipment of the crossflow circulation washing after the crossflow circulation washing. The crossflow concentrating can be performed in such a manner that the circulation of the crossflow filtration is performed for a certain period of time in a state where the liquid medium is not replenished, or the amount of the liquid replenished is smaller than the amount of the liquid discharged from the crossflow filter.

It is considerably difficult that the process of crossflow concentrating with no fresh liquid replenished is utilized for controlling the amount of the organic protective agent attached to the surface of the wires, instead of the process of crossflow circulation washing. With no liquid replenished, the desorption of the organic protective agent on the surface of the wires is difficult to occur since the concentration of the organic protective agent in the circulating liquid is not diluted. Furthermore, it is difficult to ensure the circulation washing time (or the number of circulation) that is necessary for sufficiently detaching the organic protective agent on the surface of the wires, until the concentrating is completed.

In the case where the silver nanowires having an average diameter of 50 nm or less, an average length of 10 $\mu$m or more, and an amount of the organic protective agent attached of from 1.5 to 8.0% by mass are applied to a silver nanowire ink for forming a conductive coated film, it suffices that the content of the silver nanowires in the ink is controlled to a range of from 0.02 to 5.0% by mass in terms of mass ratio of metallic silver (silver concentration) based on the total amount of the liquid medium and the silver nanowires. The content thereof may also be controlled to a range of from 0.05 to 0.50% by mass in consideration of the balance between the conductivity and the visibility characteristics. For forming a transparent conductor excellent in visibility characteristics, in particular, an ink having a silver concentration of from 0.02 to 0.25% by mass is advantageously used.

Examples

Example 1

Synthesis of Silver Nanowires

Propylene glycol (1,2-propanediol) as an alcohol solvent, silver nitrate as a silver compound, lithium chloride as a chloride, potassium bromide as a bromide, lithium hydroxide as an alkali metal hydroxide, aluminum nitrate nonahydrate as an aluminum salt, and a copolymer of vinylpyrrolidone and diallyldimethylammonium nitrate (the copolymer was produced with 99% by mass of vinylpyrrolidone and 1% by mass of diallyldimethylammonium nitrate, weight average molecular weight: 75,000) as an organic protective agent were prepared.

The weight average molecular weight Mw of the copolymer was obtained by measuring the molecular weight distribution thereof by the GPC-MALLS method under the following condition.

Equipment: HLC-8320GPC EcoSEC (produced by Tosoh Corporation
Columns: TSKgel GMPWXL ($\times$ 2) + G2500PWXL
Eluent: 100 mM sodium nitrate aqueous solution/acetonitrile = 80/20
Flow rate: 1.0 mL/min
Temperature: 40°C
Injection amount: 200 $\mu$L
Multiangle light scattering detector: DAWN HELEOS II (produced by Wyatt Technology Corporation)
Refractive index (RI) detector: Optilab T-rEX (produced by Wyatt Technology Corporation)

At ordinary temperature, 0.484 g of lithium chloride, 0.1037 g of potassium bromide, 0.426 g of lithium hydroxide, 4.994 g of a propylene glycol solution having an aluminum nitrate nonahydrate content of 20% by mass, and 83.875 g of a copolymer of vinylpyrrolidone and diallyldimethylammonium nitrate were added to 7,800 g of propylene glycol, and were dissolved therein to form a solution A. In a separate vessel, 67.96 g of silver nitrate was added to 320.0 g of propylene glycol, and dissolved by stirring at 25°C, so as to provide a silver-containing liquid (solution B).

The total amount of the solution A was heated from ordinary temperature to 90°C under stirring, and the total amount of the solution B was added to the solution A over 1 minute. After completing the addition of the solution B, the reaction liquid was continuously stirred at 90°C for 24 hours. Thereafter, the reaction liquid was cooled to ordinary temperature.

Washing

A 2 L portion was collected from the reaction liquid cooled to ordinary temperature, and acetone was added thereto in an amount of 20 times the reaction liquid, followed by stirring for 15 minutes. The mixture was then allowed to stand for 24 hours. After standing, a concentrate and a supernatant were observed, and the supernatant was removed to recover the concentrate. 320 g of pure water was added to the concentrate, and after stirring for 12 hours, acetone was added thereto in an amount of 20 times the total mass of the concentrate and 320 g of pure water, followed by stirring for 10 minutes and then allowing to stand for 24 hours. After standing, a concentrate and a supernatant were observed, and the supernatant was removed to recover the concentrate. The operations of the dispersion in pure water, the addition of acetone, the standing, and the removal of the supernatant were repeated 10 times to provide a concentrate. The concentrate is referred to as a "concentrate after washing".

Pretreatment

As the pretreatment for performing crossflow circulation washing, a redispersion treatment was performed by using a water solvent containing pure water having dissolved therein PVP (polyvinylpyrrolidone) having a weight average molecular weight of 55,000. Specifically, a water solvent having a concentration of the aforementioned PVP of 0.5% by mass was prepared, and the water solvent and the concentrate after washing were mixed to provide a silver nanowire dispersion liquid having a metallic silver concentration (i.e., the concentration of silver including silver nanowires and silver nanoparticles as an impurity in the liquid) of 0.8% by mass.

The resulting silver nanowire dispersion liquid was diluted with pure water to make a silver concentration of 0.08% by mass, so as to provide approximately 14 kg of a silver nanowire dispersion liquid. The dispersion liquid is referred to as a "crossflow original liquid". The aforementioned operations were performed in a glass vessel coated with a fluorine resin. A fluorine resin coating has an effect that hydrophilic nanowires are prevented from being attached to the surface of the vessel to enhance the yield.

Crossflow Circulation Washing

The crossflow original liquid having been subjected to the pretreatment was placed in a tank of an equipment having a tubular channel structure shown in Fig. 1, and subjected to crossflow filtration by a method of circulating continuously in the tubular channel. In this example, however, two tubular filters were disposed in parallel at the position shown by numeral 3 in Fig. 1, and the liquid was divided into the tubular filters and treated therewith. The tubular filter used as the crossflow filter had a tube wall formed of porous ceramics, and had a dimension of 500 mm in length, 12 mm in outer diameter, and 9 mm in inner diameter. The material of the ceramics was SiC (silicon carbide) and had an average pore diameter of 5.8 $\mu$m measured by the mercury intrusion method using a mercury porosimeter, produced by Micromeritics Instrument Corporation.

The detailed conditions for the measurement of the pore distribution by the mercury intrusion method were as follows.

Measurement equipment: Autopore IV 9510
Measurement range: 440 to 0.003 $\mu$m in diameter
Contact angle of mercury: 130°
Surface tension of mercury: 485 dynes/cm
Pretreatment: 300°C $\times$ 1 hour (in the air)
Mass of measurement specimen: 3.5 g

For sufficiently ensuring the measurement accuracy, the measurement data were obtained for 80 points in the measurement range of from 1 to 100 $\mu$m. The average pore diameter referred herein is a median diameter.

The liquid medium to be circulated had an initial PVP concentration (i.e., a mass ratio of PVP in the water solvent constituting the crossflow original liquid) of 250 ppm. The circulation was performed while replenishing a fresh liquid medium to the tank. Two of the aforementioned tubular filters were disposed in parallel on the circulation flow channel. The circulation was performed with a flow rate of the liquid introduced to one of the tubular filters of 12 L/min. The flow speed of the liquid introduced to each of the tubular filters was 3,145 mm/s. The capacity of the circulation flow channel was 1.7 L, and the pressure in the tubular channel at the inlet end of the tubular filter (i.e., the pressure measured with the upstream side pressure gauge 4 in Fig. 1) was 0.025 MPa. The liquid medium to be replenished was pure water and a PVP aqueous solution having a PVP concentration of 0.5% by mass. The PVP concentration of the filtrate discharged from the crossflow filters was timely measured, and the amount ratio of pure water and the PVP solution of the liquid medium to be replenished was controlled to make the PVP concentration of the circulating liquid medium (water solvent) within a range of from 10 to 5,000 ppm. The liquid medium replenished had an average PVP concentration (i.e., a mass ratio of PVP in the water solvent) of 100 ppm. The tank used was a jacketed tank, and cooling water was flown in the jacket to suppress increase of the liquid temperature during the circulation. Pure water to be replenished was cooled, and cooled pure water at a temperature of from 10 to 15°C was used. As a result, the temperature of the liquid during the circulation was in a range of from 20 to 30°C. The crossflow circulation washing was performed in this manner for 12 hours. The total amount of the liquid medium having been replenished during the circulation (i.e., the total amount of pure water and the PVP aqueous solution added) was 3 times the liquid amount of 14 kg for the silver nanowire dispersion liquid (i.e., the crossflow original liquid) at the start of the circulation.

Crossflow Concentrating

Subsequent to the crossflow circulation washing for 12 hours, the circulation by the crossflow filtration was performed in a state where the replenishment of the liquid medium was terminated, and thus the silver nanowire dispersion liquid was concentrated by utilizing the phenomenon that the liquid amount was decreased through the discharge of the filtrate. The circulation was performed for approximately 12 hours, so as to provide a silver nanowire dispersion liquid having the silver nanowires dispersed in the water solvent in an amount of 0.4% by mass in terms of metallic silver concentration.

A small amount of a specimen was collected from the silver nanowire dispersion liquid after the concentrating, and after evaporating water of the dispersion liquid on an observation table, was observed with a high-resolution FE-SEM (high-resolution field emission scanning microscope), resulting in that the silver nanowires had an average length of 14.1 $\mu$m, an average diameter of 26.4 nm, and an average aspect ratio of 14,100/26.4 $\approx$ 534. It was confirmed that the "purification" for increasing the proportion of long wires was simultaneously performed by the aforementioned crossflow circulation washing, and thus a silver nanowire dispersion liquid constituted by significantly thin and long wires was obtained. The diameter was measured with an SEM micrograph obtained with a high-resolution FE-SEM (field emission scanning microscope, S-4700, produced by Hitachi, Ltd.) in the ultra-high resolution mode with a focal length of 7 mm, an acceleration voltage of 20 kV, and a magnification of 150,000, and the length was measured with an SEM micrograph obtained in a normal mode with a focal length of 12 mm, an acceleration voltage of 3 kV, and a magnification of 2,500 (which were the same as in Examples below).

Measurement of Amount of Organic Protective Agent Attached

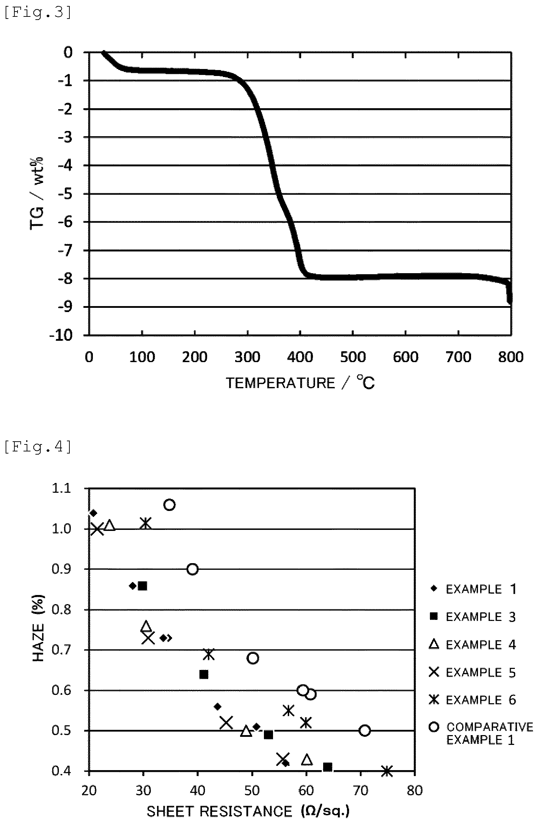

A liquid containing the silver nanowires in an amount corresponding to a silver amount of 20 mg was collected from the silver nanowire dispersion liquid after concentrating, and after adding 5 g of pure water thereto, was subjected to centrifugal separation under conditions of 3,000 rpm for 30 minutes. The supernatant was removed, and the residue was dried at 120°C for 12 hours to provide a dried product of the silver nanowires. 15 mg of the dried product was subjected to a TG-DTA measurement in the air atmosphere by using TG/DTA6300, produced by SII Nanotechnology, Inc. The temperature was increased at a rate of 10°C/min, and the weight change of from 40°C to 800°C was measured. In the measurement, a sample pan formed of alumina (5.2 mm in diameter and 5 mm in height) was used. Fig. 3 shows the TG-DTA curve. The weight change of from 150°C to 600°C was designated as the amount of the organic protective agent attached to the silver nanowires. As a result, the silver nanowires obtained in this example had an amount of the organic protective agent attached of 7.4% by mass based on the total amount of the organic protective agent and silver.

Ink Formation

Pure water and 2-propanol (isopropyl alcohol) were added to the silver nanowire dispersion liquid having the silver nanowires dispersed in the water solvent obtained through the aforementioned crossflow concentrating, so as to provide a silver nanowire dispersion liquid having the silver nanowires dispersed in the water solvent having 2-propanol dissolved therein. Subsequently, hydroxyethyl methyl cellulose as a thickener was added to provide a silver nanowire ink. The ink was obtained by controlling the amounts of the substances mixed to make a concentration of 2-propanol (IPA) in the water solvent of 10% by mass, a mass ratio of hydroxyethyl methyl cellulose (HEMC) occupied in the total mass of the ink of 0.3% by mass, and a mass ratio of the silver nanowires in terms of metallic silver concentration occupied in the total mass of the ink of 0.15% by mass.

Production of Transparent Conductor

The silver nanowire ink was coated on a surface of a PET film (Lumirror UD48, produced by Toray Industries, Inc., thickness: 100 $\mu$m) having a size of 10 cm $\times$ 5 cm by using a bar coater with various bar sizes, so as to provide coated films having various thicknesses. With a bar coater with a large bar size, a thicker coated film can be easily formed. The coated film after coating was dried at 120°C for 1 minute to provide a transparent conductor formed of the dried coated film on the PET substrate.

Measurement of Sheet Resistance and Haze

The dried coated film was measured for the sheet resistance with Loresta GP MCP-T610 with an ESP probe, produced by Mitsubishi Chemical Analytech Co., Ltd. The dried coated film was measured for the haze with Hazemeter NDH 5000, produced by Nippon Denshoku Industries Co., Ltd. For avoiding the influence of the PET substrate from the value of the haze, the value obtained by (haze including substrate) - (haze of only substrate) was used for the haze.
The major experiment conditions and the measurement results are shown in Tables 1 and 2 and Fig. 4.

Comparative Example 1

An experiment example where the concentrating is performed by the aggregation and precipitation method instead of the crossflow concentrating in Example 1 is shown herein. For providing a specimen of silver nanowires that has a length distribution of the silver nanowires equivalent to Example 1 but is different only in the amount of the organic protective agent attached, it is necessary to use the common process for the procedures until the crossflow circulation washing, which also functions as the control of the length distribution (purification). In this case, however, silver nanowires that are decreased in the amount of the organic protective agent attached equivalent to Example 1 through the crossflow circulation washing are obtained. Therefore, the concentrating was performed by the aggregation and precipitation method, in which PVP functioning as an organic protective agent was added, and thereby a specimen of silver nanowires having a larger amount of the organic protective agent attached thereto than Example 1 was obtained. An experiment example using the silver nanowires is shown as a comparative example for the sheet resistance and the haze.

Concentrating by Aggregation and Precipitation Method

The same process as in Example 1 was performed until the crossflow circulation washing. In Example 1, subsequent to the crossflow circulation washing for 12 hours, the crossflow concentrating in the state where the replenishment of the liquid was terminated was performed, but herein, the replenishment of the liquid and the circulation were terminated after completing the crossflow circulation washing for 12 hours, and then the liquid under flowing and circulation (i.e., the silver nanowire dispersion liquid) was recovered to the tank. The silver nanowire dispersion liquid thus recovered had a silver concentration of 0.032% by mass. A preliminary experiment was performed, in which acetone was added to a liquid specimen collected from the recovered dispersion liquid, followed by allowing stand for 12 hours, and then the concentrating was tried to perform by removing the supernatant with a tube pump and a pipette, but it was found that the concentrating achieving the ink formation was difficult. This is because the hydrophilicity of the silver nanowires is decreased due to the decrease of the amount of the organic protective agent attached to the surface of the silver nanowires through the crossflow circulation washing, and thus the silver nanowires cannot be sufficiently aggregated and precipitated by the poor solvent method by adding acetone.

Accordingly, to 7 kg of the silver nanowire dispersion liquid after the crossflow circulation washing, 160 g of a PVP aqueous solution having a concentration of PVP (molecular weight: 55,000) of 0.5% by mass was added, and after stirring for 12 hours, 640 g of acetone was added, followed by allowing to stand for 12 hours. After standing, a concentrate and a supernatant were observed, and the supernatant was removed with a tube pump and a pipette to perform concentrating. An operation of "redispersing and reconcentrating", in which the resulting concentrate was dispersed in 120 g of pure water, to which 480 g of acetone was added, and after allowing to stand for 12 hours, the supernatant was removed, was performed twice, and finally a silver nanowire dispersion liquid having 2.15% by mass in terms of metallic silver concentration of the silver nanowires dispersed in a water solvent was obtained. It is considered that the concentrating can be performed since PVP having high hydrophilicity is adsorbed to the surface of the silver nanowires by adding the PVP aqueous solution.

Pure water was added to the silver nanowire dispersion liquid after the concentrating, so as to provide a silver nanowire dispersion liquid having a metallic silver concentration of 1.2% by mass. A specimen was collected from the dispersion liquid, and observed with a high-resolution FE-SEM in the same manner as in Example 1, and as a result, the silver nanowires had an average length of 14.0 $\mu$m, an average diameter of 26.7 nm, and an average aspect ratio of 14,000/26.7 $\approx$ 524.

Measurement of Amount of Organic Protective Agent Attached

The silver nanowire dispersion liquid after concentrating was subjected to a TG-DTA measurement in the same manner as in Example 1. In the resulting TG-DTA curve, the weight change of from 150°C to 600°C was designated as the amount of the organic protective agent attached to the silver nanowires. As a result, the silver nanowires obtained in this example had an amount of the organic protective agent attached of 8.5% by mass based on the total amount of the organic protective agent and silver. It is considered that the amount of the organic protective agent attached is larger than 7.4% by mass in Example 1 since PVP is further adsorbed on the surface of the silver nanowires in addition to the organic protective agent having been present thereon, by adding the PVP aqueous solution in the concentrating process by the aggregation and precipitation method.

Ink Formation, Production of Transparent Conductor, and Measurement of Sheet Resistance and Haze

By using the silver nanowire dispersion liquid after concentrating, a silver nanowire ink having the same amounts of the substances mixed as in Example 1 was provided in the same manner as in Example 1. By using the ink, a transparent conductor was produced and measured for the sheet resistance and the haze, in the same manner as in Example 1.

The major experiment conditions and the measurement results are shown in Tables 1 and 2 and Fig. 4.

Example 2

A silver nanowire dispersion liquid was obtained by performing the process of "synthesis of silver nanowires", "washing", and "pretreatment (redispersing treatment in PVP aqueous solution)" under the same conditions as in Example 1, and subjected to the following process.

Crossflow Circulation Washing

The silver nanowire dispersion liquid obtained by completing the pretreatment was diluted with pure water to provide 5 L of a "crossflow original liquid" having a silver concentration controlled to 0.03% by mass. The liquid was placed in the tank of the equipment having the tubular channel structure shown in Fig. 1, and subjected to crossflow filtering by a method of continuously circulating in the tubular channel. The crossflow filter used was a tubular filter having a tube wall formed of porous ceramics, and had a length of 250 mm, an outer diameter of 12 mm, and an inner diameter of 9 mm. The material of the ceramics was SiC (silicon carbide) and had an average pore diameter of 8.25 $\mu$m measured by the mercury intrusion method using a mercury porosimeter, produced by Micromeritics Instrument Corporation, in the same manner as in Example 1.

One of the tubular filter was disposed on the circulation flow channel. The circulation was performed with a flow rate of the liquid introduced to the tubular filter of 20 L/min while replenishing the liquid medium to the tank in an amount corresponding to the amount of the liquid discharged as the filtrate. The flow speed of the liquid introduced to the tubular filter was 5,242 mm/s. As different from Example 1, the liquid medium replenished to the tank was only pure water, and no PVP aqueous solution was replenished. The pressure in the tubular channel at the inlet end of the tubular filter (i.e., the pressure measured with the upstream side pressure gauge 4 in Fig. 1) was 0.03 MPa. The tank used was a jacketed tank, and cooling water was flown in the jacket to suppress increase of the liquid temperature during the circulation. Pure water to be replenished was cooled, and cooled pure water at a temperature of from 10 to 15°C was used. As a result, the temperature of the liquid during the circulation was in a range of from 20 to 30°C. The crossflow circulation washing was performed in this manner for 70 hours. During the crossflow circulation washing, the ceramic filter was exchanged every 25 hours.

Crossflow Concentrating

Subsequent to the crossflow circulation washing for 70 hours, the circulation by the crossflow filtration was performed in a state where the replenishment of the liquid medium was terminated, and thus the silver nanowire dispersion liquid was concentrated by utilizing the phenomenon that the liquid amount was decreased through the discharge of the filtrate. The circulation was performed for approximately 200 hours, so as to provide a silver nanowire dispersion liquid having the silver nanowires dispersed in the water solvent in an amount of 1.2% by mass in terms of metallic silver concentration.

Pure water was added to the silver nanowire dispersion liquid after concentrating, so as to provide a silver nanowire dispersion liquid having a metallic silver concentration of 1.2% by mass. A specimen was collected from the dispersion liquid, and observed with a high-resolution FE-SEM in the same manner as in Example, 1, resulting in that the silver nanowires had an average length of 13.8 $\mu$m, an average diameter of 26.5 nm, and an average aspect ratio of $13,800/26.5 \approx 521$. It was confirmed that the "purification" for increasing the proportion of long wires was simultaneously performed by the aforementioned crossflow circulation washing, and thus a silver nanowire dispersion liquid constituted by significantly thin and long wires was obtained.

Measurement of Amount of Organic Protective Agent Attached

The silver nanowire dispersion liquid after concentrating was subjected to the TG-DTA measurement in the same manner as in Example 1. In the resulting TG-DTA curve, the weight change of from 150°C to 600°C was designated as the amount of the organic protective agent attached to the silver nanowires. As a result, the silver nanowires obtained in this example had an amount of the organic protective agent attached of 1.7% by mass based on the total amount of the organic protective agent and silver.

Ink Formation

By using the silver nanowire dispersion liquid after concentrating, a silver nanowire ink having the same amounts of the substances mixed as in Example 1 was provided in the same manner as in Example 1. The silver nanowire ink used the silver nanowires having an amount of the organic protective agent attached that was further smaller than Example 1, and thus there was no problem in the achievement of both the conductivity and the visibility characteristics to high levels in the transparent conductor. On the other hand, a smaller amount of the organic protective agent attached is disadvantageous for the dispersion stability of the silver nanowires in the ink. Therefore, the silver nanowire ink was investigated for the dispersion stability in the following manner.

Dispersion Stability Test for Silver Nanowire Ink

The silver nanowire ink was put in a dispersed state, and then allowed to stand in a vial container having a capacity of 50 mL. As a result, aggregation started to appear after approximately 12 hours from the start of standing. Accordingly, it is decided that the ink using the silver nanowires having a smaller amount of the organic protective agent attached of 1.7% by mass can be sufficiently applied to industrial production, by managing the process properly to complete the coating operation until the aggregation starts.

The major experiment conditions and the measurement results are shown in Tables 1 and 2.

Example 3

At ordinary temperature, 4.84 g of a propylene glycol solution having a lithium chloride content of 10% by mass, 0.1037 g of potassium bromide, 0.426 g of lithium hydroxide, 4.994 g of a propylene glycol solution having an aluminum nitrate nonahydrate content of 20% by mass, and 83.875 g of polymer powder as a supply source of an organic protective agent were dissolved in 8,116.3 g of propylene glycol to form a solution A. The supply source of an organic protective agent used herein was polymer powder A containing 0.0299 mol of ethyl acetate per 1 mol of a copolymer of vinylpyrrolidone and a diallyldimethylammonium salt. In a separate vessel, 67.96 g of silver nitrate was added to a mixed solution of 95.70 g of propylene glycol and 8.00 g of pure water, and dissolved by stirring at 35°C, so as to provide a solution B containing silver. The solution A was placed in a reaction vessel, and heated from ordinary temperature to 90°C under stirring at a rotation number of 175 rpm, and then the total amount of the solution B was added to the solution A through two addition ports over 1 minute. After completing the addition of the solution B, the reaction liquid was continuously stirred at 90°C for 24 hours. Thereafter, the reaction liquid was cooled to ordinary temperature to synthesize silver nanowires.

Washing

Acetone was added to the reaction liquid cooled to ordinary temperature in an amount of 20 times the reaction liquid, followed by stirring for 15 minutes. The mixture was then allowed to stand for 24 hours. After standing, a concentrate and a supernatant were observed, and the supernatant was removed to recover the concentrate. 1,280 g of pure water was added to the concentrate, and after stirring for 12 hours, acetone was added thereto in an amount of 20 times the total mass of the concentrate and 1,280 g of pure water, followed by stirring for 10 minutes and then allowing to stand for 24 hours. After standing, a concentrate and a supernatant were observed, and the supernatant was removed to recover the concentrate. The operations of the dispersion in pure water, the addition of acetone, the standing, and the removal of the supernatant were repeated 10 times to provide a concentrate. The concentrate is referred to as a "concentrate after washing".

Pretreatment

As the pretreatment for performing crossflow circulation washing, a redispersion treatment was performed by using a water solvent containing pure water having dissolved therein PVP (polyvinylpyrrolidone) having a weight average molecular weight of 55,000. Specifically, a water solvent having a concentration of the aforementioned PVP of 0.5% by mass was prepared, and the water solvent and the concentrate after washing were mixed to provide a silver nanowire dispersion liquid having a metallic silver concentration (i.e., the concentration of silver including silver nanowires and silver nanoparticles as an impurity in the liquid) of 0.8% by mass.

The resulting silver nanowire dispersion liquid was diluted with pure water to make a silver concentration of 0.08% by mass, so as to provide approximately 52 kg of a silver nanowire dispersion liquid. The dispersion liquid is referred to as a "crossflow original liquid". The aforementioned operations were performed in a glass vessel coated with a fluorine resin. A fluorine resin coating has an effect that hydrophilic nanowires are prevented from being attached to the surface of the vessel to enhance the yield. A liquid containing the silver nanowires in an amount corresponding to a silver amount of 20 mg was collected from the "crossflow original liquid", and subjected to the TG-DTA measurement under the aforementioned measurement conditions. As a result, the silver nanowires in the crossflow original liquid had an amount of the organic protective agent attached thereto of 9.7% by mass based on the total amount of the organic protective agent and silver.

Crossflow Circulation Washing

The crossflow original liquid having been subjected to the pretreatment was placed in a tank of an equipment having a tubular channel structure shown in Fig. 1, and subjected to crossflow filtration by a method of circulating continuously in the tubular channel. In this example, however, nine tubular filters were disposed in parallel at the position shown by numeral 3 in Fig. 1, and the liquid was divided into the tubular filters and treated therewith. The tubular filter used as the crossflow filter had a tube wall formed of porous ceramics, and had a dimension of 500 mm in length, 12 mm in outer diameter, and 9 mm in inner diameter. The material of the ceramics was SiC (silicon carbide) and had an average pore diameter of 5.9 $\mu$m measured by the mercury intrusion method using a mercury porosimeter, produced by Micromeritics Instrument Corporation, in the same manner as in Example 1.

The liquid medium to be circulated had an initial PVP concentration (i.e., a mass ratio of PVP in the water solvent constituting the crossflow original liquid) of 250 ppm. The circulation was performed while replenishing a fresh liquid medium to the tank. Nine of the aforementioned tubular filters were disposed in parallel on the circulation flow channel. The circulation was performed with a flow rate of the liquid introduced to one of the tubular filters of 13 L/min. The flow speed of the liquid introduced to each of the tubular filters was 3,495 mm/s. The pressure in the tubular channel at the inlet end of the tubular filter (i.e., the pressure measured with the upstream side pressure gauge 4 in Fig. 1) was 0.025 MPa. The liquid medium to be replenished was a PVP aqueous solution having a PVP concentration (i.e., a mass ratio of PVP in the water solvent) of 10 ppm. The tank used was a jacketed tank, and cooling water was flown in the jacket to suppress increase of the liquid temperature during the circulation. The liquid medium to be replenished was cooled to a temperature of from 10 to 15°C. As a result, the temperature of the liquid during the circulation was in a range of from 20 to 30°C. The crossflow circulation washing was performed in this manner for 5 hours. The total amount of the liquid medium having been replenished during the circulation was 197 L. The average filtrate flow rate per one of the tubular filters was 73 mL/min.

Crossflow Concentrating

Subsequent to the crossflow circulation washing for 5 hours, the circulation by the crossflow filtration was performed in a state where the replenishment of the liquid medium was terminated, and thus the silver nanowire dispersion liquid was concentrated by utilizing the phenomenon that the liquid amount was decreased through the discharge of the filtrate. The circulation was performed for approximately 5 hours, so as to provide a silver nanowire dispersion liquid having the silver nanowires dispersed in the water solvent in an amount of 0.4% by mass in terms of metallic silver concentration.

A small amount of a specimen was collected from the silver nanowire dispersion liquid after the concentrating, and observed with a high-resolution FE-SEM in the same manner as in Example 1, resulting in that the silver nanowires had an average length of 13.8 $\mu$m, an average diameter of 26.5 nm, and an average aspect ratio of $13,800/26.5 \approx 521$.

Measurement of Amount of Organic Protective Agent Attached

The silver nanowire dispersion liquid after concentrating was subjected to the TG-DTA measurement in the same manner as in Example 1. In the resulting TG-DTA curve, the weight change of from 150°C to 600°C was designated as the amount of the organic protective agent attached to the silver nanowires. As a result, the silver nanowires obtained in this example had an amount of the organic protective agent attached of 5.5% by mass based on the total amount of the organic protective agent and silver.

Ink Formation, Production of Transparent Conductor, and Measurement of Sheet Resistance and Haze

By using the silver nanowire dispersion liquid after concentrating, a silver nanowire ink having the same amounts of the substances mixed as in Example 1 was provided in the same manner as in Example 1. By using the ink, a transparent conductor was produced and measured for the sheet resistance and the haze, in the same manner as in Example 1.

The major experiment conditions and the measurement results are shown in Tables 1 and 2 and Fig. 4.

Example 4

A silver nanowire dispersion liquid was obtained by performing the process of "synthesis of silver nanowires", "washing", and "pretreatment (redispersing treatment in PVP aqueous solution)" under the same conditions as in Example 3, and subjected to the following process.

Crossflow Circulation Washing

The liquid medium to be circulated had an initial PVP concentration (i.e., a mass ratio of PVP in the water solvent constituting the crossflow original liquid) of 250 ppm. The circulation was performed while replenishing a fresh liquid medium to the tank. Nine of the aforementioned tubular filters were disposed in parallel on the circulation flow channel. The circulation was performed with a flow rate of the liquid introduced to one of the tubular filters of 13 L/min. The flow speed of the liquid introduced to each of the tubular filters was 3,495 mm/s. The pressure in the tubular channel at the inlet end of the tubular filter (i.e., the pressure measured with the upstream side pressure gauge 4 in Fig. 1) was 0.025 MPa. The liquid medium to be replenished was a PVP aqueous solution having a PVP concentration (i.e., a mass ratio of PVP in the water solvent) of 50 ppm. The tank used was a jacketed tank, and cooling water was flown in the jacket to suppress increase of the liquid temperature during the circulation. The liquid medium to be replenished was cooled to a temperature of from 10 to 15°C. As a result, the temperature of the liquid during the circulation was in a range of from 20 to 30°C. The crossflow circulation washing was performed in this manner for 5 hours. The total amount of the liquid medium having been replenished during the circulation was 214 L. The average filtrate flow rate per one of the tubular filters was 79 mL/min.

Crossflow Concentrating

The crossflow concentrating was performed in the same manner as in Example 3, so as to provide a silver nanowire dispersion liquid having the silver nanowires dispersed in the water solvent in an amount of 0.4% by mass in terms of metallic silver concentration.
A small amount of a specimen was collected from the silver nanowire dispersion liquid after the concentrating, and observed with a high-resolution FE-SEM in the same manner as in Example 1, resulting in that the silver nanowires had an average length of 14.2 $\mu$m, an average diameter of 26.4 nm, and an average aspect ratio of 14,200/26.4 $\approx$ 538.
The silver nanowire dispersion liquid after concentrating was subjected to the TG-DTA measurement in the same manner as in Example 1. In the resulting TG-DTA curve, the weight change of from 150°C to 600°C was designated as the amount of the organic protective agent attached to the silver nanowires. As a result, the silver nanowires obtained in this example had an amount of the organic protective agent attached of 6.2% by mass based on the total amount of the organic protective agent and silver.

Ink Formation, Production of Transparent Conductor, and Measurement of Sheet Resistance and Haze

By using the silver nanowire dispersion liquid after concentrating, a silver nanowire ink having the same amounts of the substances mixed as in Example 1 was provided in the same manner as in Example 1. By using the ink, a transparent conductor was produced and measured for the sheet resistance and the haze, in the same manner as in Example 1.
The major experiment conditions and the measurement results are shown in Tables 1 and 2 and Fig. 4.

Example 5

A silver nanowire dispersion liquid was obtained by performing the process of "synthesis of silver nanowires" and "washing" under the same conditions as in Example 3, and subjected to the following process.

Pretreatment

Approximately 52 kg of a silver nanowire dispersion liquid having a silver concentration of 0.08% by mass was obtained in the same manner as in Example 3 except that the polymer used was changed to a copolymer of vinylpyrrolidone and diallyldimethylammonium nitrate having a weight average molecular weight of 70,000.

Crossflow Circulation Washing

The polymer contained in the liquid medium to be circulated was the copolymer of vinylpyrrolidone and diallyldimethylammonium nitrate. The liquid medium to be circulated had an initial concentration of the copolymer of vinylpyrrolidone and diallyldimethylammonium nitrate (i.e., a mass ratio of the copolymer of vinylpyrrolidone and diallyldimethylammonium nitrate in the water solvent constituting the crossflow original liquid) of 250 ppm. The circulation was performed while replenishing a fresh liquid medium to the tank. Nine of the aforementioned tubular filters were disposed in parallel on the circulation flow channel. The circulation was performed with a flow rate of the liquid introduced to one of the tubular filters of 13 L/min. The flow speed of the liquid introduced to each of the tubular filters was 3,495 mm/s. The pressure in the tubular channel at the inlet end of the tubular filter (i.e., the pressure measured with the upstream side pressure gauge 4 in Fig. 1) was 0.025 MPa. The liquid medium to be replenished was a copolymer aqueous solution having a concentration of the copolymer of vinylpyrrolidone and diallyldimethylammonium nitrate (i.e., a mass ratio of the copolymer of vinylpyrrolidone and diallyldimethylammonium nitrate in the water solvent) of 100 ppm. The tank used was a jacketed tank, and cooling water was flown in the jacket to suppress increase of the liquid temperature during the circulation. The liquid medium to be replenished was cooled to a temperature of from 10 to 15°C. As a result, the temperature of the liquid during the circulation was in a range of from 20 to 30°C. The crossflow circulation washing was performed in this manner for 5 hours. The total amount of the liquid medium having been replenished during the circulation was 248 L. The average filtrate flow rate per one of the tubular filters was 92 mL/min.

Crossflow Concentrating

The crossflow concentrating was performed in the same manner as in Example 3, so as to provide a silver nanowire dispersion liquid having the silver nanowires dispersed in the water solvent in an amount of 0.4% by mass in terms of metallic silver concentration.

A small amount of a specimen was collected from the silver nanowire dispersion liquid after the concentrating, and observed with a high-resolution FE-SEM in the same manner as in Example 1, resulting in that the silver nanowires had an average length of 14.3 μm, an average diameter of 26.0 nm, and an average aspect ratio of 14,300/26.0 ≈ 550.

Measurement of Amount of Organic Protective Agent Attached

The silver nanowire dispersion liquid after concentrating was subjected to the TG-DTA measurement in the same manner as in Example 1. In the resulting TG-DTA curve, the weight change of from 150°C to 600°C was designated as the amount of the organic protective agent attached to the silver nanowires. As a result, the silver nanowires obtained in this example had an amount of the organic protective agent attached of 7.3% by mass based on the total amount of the organic protective agent and silver.

Ink Formation, Production of Transparent Conductor, and Measurement of Sheet Resistance and Haze

By using the silver nanowire dispersion liquid after concentrating, a silver nanowire ink having the same amounts of the substances mixed as in Example 1 was provided in the same manner as in Example 1. By using the ink, a transparent conductor was produced and measured for the sheet resistance and the haze, in the same manner as in Example 1.

The major experiment conditions and the measurement results are shown in Tables 1 and 2 and Fig. 4.

Example 6

At ordinary temperature, 89.6 g of an ethylene glycol solution having a content of tetrabutylammonium chloride (produced by Wako Pure Chemical Industries, Ltd.) of 5% by mass and 267.447 g of PVP (polyvinylpyrrolidone, average molecular weight: 55,000) were added to 8,615.38 g of ethylene glycol, and dissolved therein to form a solution A. In a separate vessel, 67.96 g of silver nitrate was added to 344.615 g of ethylene glycol as an alcohol solvent, and dissolved by stirring at 25°C, so as to provide a solution B containing silver. The solution A was placed in a reaction vessel, and heated from ordinary temperature to 90°C under stirring at a rotation number of 175 rpm, and then the total amount of the solution B was added to the solution A through two addition ports over 1 minute. After completing the addition of the solution B, the reaction liquid was continuously stirred at 90°C for 24 hours. Thereafter, the reaction liquid was cooled to ordinary temperature to synthesize silver nanowires.

A silver nanowire dispersion liquid was obtained by performing the process of "washing" and "pretreatment (redispersing treatment in PVP aqueous solution)" under the same conditions as in Example 3, and subjected to the following process. A liquid containing the silver nanowires in an amount corresponding to a silver amount of 20 mg was collected from the crossflow original liquid, and subjected to the TG-DTA measurement under the aforementioned measurement conditions. As a result, the silver nanowires in the crossflow original liquid had an amount of the organic protective agent attached thereto of 10.0% by mass based on the total amount of the organic protective agent and silver.

Crossflow Circulation Washing

The liquid medium to be circulated had an initial PVP concentration (i.e., a mass ratio of PVP in the water solvent constituting the crossflow original liquid) of 250 ppm. The circulation was performed while replenishing a fresh liquid medium to the tank. Nine of the aforementioned tubular filters were disposed in parallel on the circulation flow channel. The circulation was performed with a flow rate of the liquid introduced to one of the tubular filters of 13 L/min. The flow speed of the liquid introduced to each of the tubular filters was 3,495 mm/s. The pressure in the tubular channel at the inlet end of the tubular filter (i.e., the pressure measured with the upstream side pressure gauge 4 in Fig. 1) was 0.025 MPa. The liquid medium to be replenished was a PVP aqueous solution having a PVP concentration (i.e., a mass ratio of PVP in the water solvent) of 100 ppm. The tank used was a jacketed tank, and cooling water was flown in the jacket to suppress increase of the liquid temperature during the circulation. The liquid medium to be replenished was cooled to a temperature of from 10 to 15°C. As a result, the temperature of the liquid during the circulation was in a range of from 20 to 30°C. The crossflow circulation washing was performed in this manner for 5 hours. The total amount of the liquid medium having been replenished during the circulation was 195 L. The average filtrate flow rate per one of the tubular filters was 72 mL/min.

Crossflow Concentrating

Subsequent to the crossflow circulation washing for 5 hours, the circulation by the crossflow filtration was performed in a state where the replenishment of the liquid medium was terminated, and thus the silver nanowire dispersion liquid was concentrated by utilizing the phenomenon that the liquid amount was decreased through the discharge of the filtrate. The circulation was performed for approximately 5 hours, so as to provide a silver nanowire dispersion liquid having the silver nanowires dispersed in the water solvent in an amount of 0.4% by mass in terms of metallic silver concentration.

A small amount of a specimen was collected from the silver nanowire dispersion liquid after the concentrating, and observed with a high-resolution FE-SEM in the same manner as in Example 1, resulting in that the silver nanowires had an average length of 9.5 $\mu$m, an average diameter of 31.5 nm, and an average aspect ratio of 9,500/31.5 $\approx$ 302.

Measurement of Amount of Organic Protective Agent Attached

The silver nanowire dispersion liquid after concentrating was subjected to the TG-DTA measurement in the same manner as in Example 1. In the resulting TG-DTA curve, the weight change of from 150°C to 600°C was designated as the amount of the organic protective agent attached to the silver nanowires. As a result, the silver nanowires obtained in this example had an amount of the organic protective agent attached of 7.1% by mass based on the total amount of the organic protective agent and silver.

Ink Formation, Production of Transparent Conductor, and Measurement of Sheet Resistance and Haze

By using the silver nanowire dispersion liquid after concentrating, a silver nanowire ink having the same amounts of the substances mixed as in Example 1 was provided in the same manner as in Example 1. By using the ink, a transparent conductor was produced and measured for the sheet resistance and the haze, in the same manner as in Example 1.

The major experiment conditions and the measurement results are shown in Tables 1 and 2 and Fig. 4.

Table 1

| No. of Example | Polymer used for synthesis of silver nanowires | Polymer use d for pretreatment | Crossflow circulation washing | | | | | | | | Concentrating method |
| | | | Tubular filter | | | Flow speed of liquid introduced per one filter (mm/s) | Flow rate of filtrate per one filter (mL/min) | Treatment time (h) | Replenished liquid | | |
| | | | Material | Average pore diame-ter ($\mu$m) | Number of filters used | | | | Polymer used | Polymer concentration (ppm) | |
| Example 1 | copolymer | PVP | SiC | 5.8 | 2 | 3145 | 70 | 12 | PVP | 100 | crossflow |
| Example 2 | copolymer | PVP | SiC | 5.8 | 1 | 5242 | 119 | 70 | - | 0 | crossflow |
| Comparative Example 1 | copolymer | PVP | SiC | 5.8 | 2 | 3145 | 70 | 12 | PVP | 100 | aggregation and precipitation method after adding PVP |
| Example 3 | copolymer | PVP | SiC | 5.9 | 9 | 3495 | 73 | 5 | PVP | 10 | crossflow |
| Example 4 | copolymer | PVP | SiC | 5.9 | 9 | 3495 | 79 | 5 | PVP | 50 | crossflow |
| Example 5 | copolymer | copolymer | SiC | 5.9 | 9 | 3495 | 92 | 5 | copolymer | 100 | crossflow |
| Example 6 | PVP | PVP | SiC | 5.9 | 9 | 3495 | 72 | 5 | PVP | 100 | crossflow |

Table 2

| No. of Example | Silver nanowire ink | | | | | | | | Bar size of bar coater | Transparent conductor | |
| | Silver nanowires | | | | Liquid medium | Composition (% by mass) | | | | Sheet resistance ($\Omega$/sq.) | Haze (%) |
| | Amount of organic protective agent attached (% by mass) | Average length ($\mu$m) | Average diameter (nm) | Average aspect ratio | | IPA | HEMC | Silver | | | |
| Example 1 | 7.4 | 14.1 | 26.4 | 534 | water | 10 | 0.3 | 0.15 | 10 | 20.83 | 1.04 |
| | | | | | | | | | 8 | 28.04 | 0.86 |
| | | | | | | | | | 8 | 34.65 | 0.73 |
| | | | | | | | | | 8 | 33.72 | 0.73 |
| | | | | | | | | | 7 | 50.8 | 0.51 |
| | | | | | | | | | 7 | 43.7 | 0.56 |
| | | | | | | | | | 6 | 56.2 | 0.42 |
| Example 2 | 1.7 | 13.8 | 26.5 | 521 | water | 10 | 0.3 | 0.15 | (no data) | | |
| Comparative Example 1 | 8.5 | 14.0 | 26.7 | 524 | water | 10 | 0.3 | 0.15 | 10 | 34.89 | 1.06 |
| | | | | | | | | | 10 | 39.1 | 0.90 |
| | | | | | | | | | 8 | 50.2 | 0.68 |
| | | | | | | | | | 7 | 60.8 | 0.59 |
| | | | | | | | | | 6 | 59.4 | 0.60 |
| | | | | | | | | | 5 | 70.8 | 0.50 |
| Example 3 | 5.5 | 13.8 | 26.5 | 521 | water | 10 | 0.3 | 0.15 | 10 | 29.9 | 0.86 |
| | | | | | | | | | 8 | 41.2 | 0.64 |
| | | | | | | | | | 7 | 53.1 | 0.49 |
| | | | | | | | | | 6 | 64.0 | 0.41 |
| | | | | | | | | | 5 | 77.4 | 0.32 |

(continued)

| No. of Example | Silver nanowire ink | | | | | | | | Bar size of bar coater | Transparent conductor | |
| | Silver nanowires | | | | Liquid medium | Composition (% by mass) | | | | Sheet resistance ($\Omega$/sq.) | Haze (%) |
| | Amount of organic protective agent attached (% by mass) | Average length ($\mu$m) | Average diameter (nm) | Average aspect ratio | | IPA | HEMC | Silver | | | |
| Example 4 | 6.2 | 14.2 | 26.4 | 538 | water | 10 | 0.3 | 0.15 | 10 | 23.8 | 1.01 |
| | | | | | | | | | 8 | 30.5 | 0.76 |
| | | | | | | | | | 7 | 48.9 | 0.50 |
| | | | | | | | | | 6 | 60.1 | 0.43 |
| | | | | | | | | | 5 | 73.5 | 0.32 |
| Example 5 | 7.3 | 14.3 | 26.0 | 550 | water | 10 | 0.3 | 0.15 | 10 | 21.5 | 1.00 |
| | | | | | | | | | 8 | 30.9 | 0.73 |
| | | | | | | | | | 7 | 45.3 | 0.52 |
| | | | | | | | | | 6 | 55.7 | 0.43 |
| | | | | | | | | | 5 | 68.2 | 0.30 |
| Example 6 | 7.1 | 9.5 | 31.5 | 302 | water | 10 | 0.3 | 0.15 | 10 | 30.4 | 1.02 |
| | | | | | | | | | 8 | 42.1 | 0.69 |
| | | | | | | | | | 7 | 56.8 | 0.55 |
| | | | | | | | | | 6 | 59.9 | 0.52 |
| | | | | | | | | | 5 | 74.9 | 0.40 |

It is understood that in the case where transparent conductors are produced by using silver nanowires having average diameters and average lengths that are equivalent to each other by the same method, the sheet resistance is significantly decreased by controlling the amount of the organic protective agent attached thereto to 8.0% by mass or less, and the haze is significantly decreased in the cases where equivalent sheet resistances are obtained (i.e., the comparison of Comparative Example 1 and Examples 1, 3, 4, and 5 in Fig. 4). It is confirmed that a transparent conductor that achieves both the conductivity and the visibility characteristics to high levels can be obtained, for example, a sheet resistance of 50 Ω/sq. or less and a haze of 0.6% or less, or a sheet resistance of 40 Ω/sq. or less and a haze of 0.8% or less. In Example 6, the silver nanowires have an average aspect ratio that is smaller than Comparative Example 1, but the haze assuming the equivalent sheet resistance is improved as compared to Comparative Example 1 by decreasing the amount of the organic protective agent attached.

Reference Sign List

> 1 Tank
> 2 Pump
> 3 Crossflow filter
> 4 Upstream side pressure gauge
> 5 Downstream side pressure gauge
> 6 Silver nanowire dispersion liquid before crossflow circulation washing
> 7 Liquid medium to be replenished
> 10 Circulation flow channel
> 30 Filtrate
> 31 Pore (void) of porous ceramic filter
> 32 Interior of tubular channel
> 60 Direction of flow
> 61 Particulate impurities
> 62 Short silver nanowires
> 63 Long silver nanowires

**Claims**

1. Silver nanowires having attached to a surface thereof an organic protective agent, having an average diameter of 50 nm or less and an average length of 10 μm or more, and having an amount of the organic protective agent attached of from 1.5 to 8.0% by mass based on the total amount of the organic protective agent and silver.

2. The silver nanowires according to claim 1, wherein the organic protective agent is a polymer having a vinylpyrrolidone structural unit.

3. The silver nanowires according to claim 1, wherein the organic protective agent is a polymer having a weight average molecular weight of from 30,000 to 3,000,000.

4. A silver nanowire ink comprising a liquid medium and therein the silver nanowires according to claim 1 in an amount of from 0.02 to 5.0% by mass in terms of metallic silver concentration.

5. A method for producing silver nanowires having an amount of an organic protective agent attached of from 1.5 to 8.0% by mass based on the total amount of the organic protective agent and silver, the method comprising: circulating silver nanowires having attached thereto the organic protective agent, in a circulation flow channel having in a middle thereof a crossflow filter, along with a liquid medium; and performing crossflow filtration with the filter while replenishing the liquid medium to the circulation flow channel continuously or intermittently, so as to wash off and remove a part of the organic protective agent on the surface of the silver nanowires to control an amount of the organic protective agent attached (crossflow circulation washing step).

6. The method for producing silver nanowires according to claim 5, wherein the silver nanowires subjected to the crossflow circulation washing step have an average diameter of 50 nm or less.

7. The method for producing silver nanowires according to claim 5, wherein the silver nanowires subjected to the crossflow circulation washing step are subjected to a pretreatment of dispersing the silver nanowires in a water solvent having dissolved therein one or more kinds of a polymer selected from PVP (polyvinylpyrrolidone) and a copolymer of vinylpyrrolidone and another monomer.

8. The method for producing silver nanowires according to claim 5, wherein the liquid medium circulated is a water solvent.

9. The method for producing silver nanowires according to claim 5, wherein the liquid medium circulated is a water solvent having dissolved therein one or more kinds of a polymer selected from PVP (polyvinylpyrrolidone) and a copolymer of vinylpyrrolidone and another monomer.

10. The method for producing silver nanowires according to claim 5, wherein the liquid medium circulated is a water solvent having dissolved therein one or more kinds of a polymer selected from PVP (polyvinylpyrrolidone) and a copolymer of vinylpyrrolidone and another monomer in a concentration of from 10 to 5,000 ppm.

[Fig.1]

[Fig.2]

[Fig.3]

[Fig.4]

[Fig.5]

## INTERNATIONAL SEARCH REPORT

| International application No. |
| --- |
| PCT/JP2017/043781 |

**A.   CLASSIFICATION OF SUBJECT MATTER**
Int.Cl. B22F1/00(2006.01)i

According to International Patent Classification (IPC) or to both national classification and IPC

**B.   FIELDS SEARCHED**

Minimum documentation searched (classification system followed by classification symbols)
Int.Cl. B22F1/00

| Documentation searched other than minimum documentation to the extent that such documents are included in the fields searched | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
| --- | --- | --- |
| X<br>Y | WO 2013/002195 A1 (FUJIFILM CORP.) 03 January 2013, claims, paragraphs [0003], [0061], [0081] table 1 (Family: none) | 1-4<br>5-10 |
| Y | JP 2013-199690 A (FUJIFILM CORP.) 03 October 2013, claims, paragraph [0089] & WO 2013/146509 A1, claims, paragraph [0089] | 5-10 |

☐   Further documents are listed in the continuation of Box C.     ☐   See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 24 January 2018 (24.01.2018) | 06 February 2018 (06.02.2018) |

| Name and mailing address of the ISA/<br>Japan Patent Office<br>3-4-3, Kasumigaseki, Chiyoda-ku,<br>Tokyo 100-8915, Japan | Authorized officer |
| --- | --- |
| | Telephone No. |

Form PCT/ISA/210 (second sheet) (January 2015)

**EP 3 552 734 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015180772 A
- JP 2016055283 A
- JP 2015206081 A